# FASCICULE DE BREVET EUROPEEN

(11) **EP 3 980 635 B1**
(45) Date de publication et mention de la délivrance du brevet: **17.04.2024**
(21) Numéro de dépôt: 20739749.8
(22) Date de dépôt: 25.05.2020
(51) Int. Cl.: F02D 41/06, F02D 41/14, F02D 41/24, F02D 41/34, F02D 41/40

(54) **PROCÉDÉ DE CORRECTION DE RICHESSE DE CARBURANT LORS D'UN DÉMARRAGE À FROID D'UN MOTEUR THERMIQUE**
VERFAHREN ZUR KORREKTUR DER REICHHALTIGKEIT VON KRAFTSTOFF WÄHREND EINES KALTSTARTS EINES HEIZMOTORS
METHOD FOR CORRECTING THE RICHNESS OF FUEL DURING A COLD START OF A HEAT ENGINE

(30) Priorité: 04.06.2019 FR 1905884
(43) Date de publication de la demande: 13.04.2022
(73) Titulaire: Stellantis Auto SAS, 78300 Poissy (FR)
(72) Inventeur: TRAVAILLARD, Cyril, 78920 ECQUEVILLY (FR); DAMBRICOURT, Frederic, 78600 MAISONS LAFFITTE (FR); POULY, Clement, 92700 COLOMBES (FR); TAIBALY, Hatim, 92600 ASNIERES-SUR-SEINE (FR)
(86) Numéro de dépôt international: PCT/FR2020/050865
(87) Numéro de publication internationale: WO 2020/245522

(56) Documents cités:
- DE-A1-102006 041 686
- FR-A1- 2 870 890
- GB-A- 2 438 706
- JP-A- 2004 197 693
- US-A1- 2001 035 008

## Description

L'invention concerne de manière générale la correction de richesse de carburant dans un moteur thermique. Plus particulièrement, L'invention se rapporte à un procédé de correction de la richesse de carburant dans un moteur thermique lors d'un démarrage à froid de celui-ci avec une sonde de richesse disposée dans la ligne d'échappement de gaz du moteur thermique n'ayant pas encore atteint sa température de fonctionnement et n'étant pas opérationnelle.

L'invention se destine plus particulièrement à un moteur thermique à essence, à allumage commandé. Cependant, la présente invention pourra aussi être appliquée à un moteur à allumage par compression. Le moteur thermique peut être intégré dans un véhicule automobile mais ceci n'est pas limitatif.

Dans l'exemple non limitatif d'un moteur thermique à allumage commandé, une ligne d'échappement de gaz du moteur thermique intègre au moins un catalyseur d'oxydoréduction trois voies et une sonde de richesse disposée en amont du catalyseur. Le moteur thermique peut être un moteur turbocompressé avec injection de carburant automatique ou être muni d'un mécanisme de distribution à calage variable des soupapes dit « VVT » pour « Variable Valve Timing ». Le contrôle commande effectué par une unité de contrôle moteur associée au moteur thermique comporte différentes boucles de régulation dont une boucle d'admission d'air avec une vanne papillon ou des soupapes à calage variable, une boucle de carburant avec un ou des injecteurs de carburant et une pompe à carburant, avantageusement haute pression, avec une régulation de richesse qui est basée sur une mesure de la sonde de richesse amont présente dans la ligne d'échappement de gaz du moteur thermique.

Le contrôle commande fait appel à des modèles d'actionneurs adaptés à chaud afin de pallier aux dispersions des composants et à leur vieillissement. Des modèles physiques adaptatifs sont recalés lorsque le moteur est chaud et fournissent des valeurs fausses pour un moteur froid, au démarrage lorsque la sonde de richesse n'a pas encore atteint sa température de fonctionnement et n'est pas opérationnelle. Il conviendrait d'ajuster des modèles physiques adaptatifs pour compenser l'absence de fonctionnement de la sonde de richesse, mais ceux-ci sont incomplets et en nombre insuffisants pour la problématique d'un moteur thermique froid. Les modèles physiques adaptatifs présents actuellement ne peuvent pas recaler la mesure de richesse de carburant tant que la sonde de richesse n'est pas opérationnelle, ce qui est le cas lors d'un démarrage à froid.

Par le document FR2817294A1, il est connu un contrôle commande avec une régulation de richesse et de commande des injecteurs. Ce document ne traite cependant pas du pilotage des modèles physiques adaptatifs lorsque la régulation de richesse est inactive.

Le document FR3052189A1 propose d'améliorer la précision des actionneurs en recalant leurs modèles de comportement et en prenant en compte dans le cas de l'injecteur un écart de richesse entre une mesure et une consigne. Un apprentissage des modèles d'actionneurs est également proposé. Ce document ne donne cependant aucune information quant au contrôle de la richesse de carburant lors d'un démarrage à froid du moteur thermique avec la sonde de richesse non opérationnelle.

On connait encore du document GB2438706A un procédé de correction de la richesse de carburant dans un moteur thermique lors d'un démarrage à froid de celui-ci selon le préambule de la revendication 1.

Il est souhaitable de proposer un procédé nouveau permettant de corriger la richesse de carburant d'un moteur thermique en offrant une fonction d'apprentissage et de restitution d'une correction de richesse lors d'un démarrage à froid avec une sonde de richesse non opérationnelle, avec une suppression de situations de vie non conformes de façon à augmenter la fiabilité et la robustesse de l'apprentissage des corrections à froid tout au long de la vie du moteur thermique.

Selon un premier aspect, l'invention concerne un procédé de correction de la richesse de carburant dans un moteur thermique lors d'un démarrage à froid de celui-ci, avec une sonde de richesse disposée dans la ligne d'échappement de gaz dudit moteur thermique n'ayant pas encore atteint sa température de fonctionnement et n'étant pas opérationnelle, ledit procédé comprenant une correction d'une quantité de carburant injectée dans ledit moteur thermique lors d'un démarrage à froid en cours en fonction de quantités de carburant injectées corrigées apprises de précédents démarrages à froid permettant d'atteindre une consigne de richesse, mémorisées et classées en fonction de premier paramètres physiques, la quantité de carburant injectée corrigée choisie étant celle dont le classement en fonction des premiers paramètres physiques se rapproche le plus du démarrage à froid en cours, caractérisé en ce qu'il vérifie la satisfaction de conditions prédéterminées pour autoriser ladite correction, et lesdites conditions prédéterminées comprenant des conditions d'inhibition interdisant ladite correction lorsque l'apprentissage de ladite quantité de carburant injectée corrigée choisie est jugé obsolète par rapport au démarrage à froid en cours, et comprend la détermination d'un écart entre une première image reflétant un premier état de vieillissement du moteur thermique à un premier instant du démarrage à froid en cours et une deuxième image reflétant un deuxième état de vieillissement du moteur thermique à un deuxième instant du précédent démarrage à froid, les images étant représentées par un ensemble de deuxièmes paramètres physiques du moteur thermique et/ou d'un véhicule comprenant le moteur thermique, et une comparaison de l'écart à un seuil prédéterminé, la quantité de carburant injectée corrigée choisie étant jugée obsolète lorsque l'écart est supérieur au seuil prédéterminé.

Selon une autre caractéristique particulière, le procédé comprend la sélection de la deuxième image dans une pluralité d'images organisées par classes, la sélection étant faite à partir de l'ensemble de deuxièmes paramètres physiques.

Selon encore une autre caractéristique particulière, ledit ensemble de deuxièmes paramètres physiques comprend un écart de kilométrage du véhicule comprenant le moteur thermique, un indicateur d'évolution de moyens d'adaptation de contrôle moteur et/ou un écart temporel.

Selon encore une autre caractéristique particulière, les premiers paramètres physiques comprennent une durée d'arrêt moteur avant le démarrage en cours, une température prise au démarrage parmi une température de fluide de refroidissement, une température d'air admis dans le moteur thermique, une température d'huile de lubrification du moteur thermique 1, une température d'air extérieur

L'invention concerne aussi une unité de contrôle moteur comportant une mémoire stockant des instructions de programme pour la mise en oeuvre du procédé décrit brièvement ci-dessus, ainsi qu'un véhicule à moteur thermique comprenant une telle unité de contrôle moteur.

D'autres avantages et caractéristiques de la présente invention apparaîtront plus clairement à la lecture de la description détaillée ci-dessous de plusieurs formes de réalisation particulières de l'invention, en référence aux dessins annexés, dans lesquels:
[Fig.1] La Fig.1 est un logigramme d'une forme de réalisation du procédé selon la présente invention pour la correction de richesse de carburant lors d'un démarrage à froid du moteur thermique.
[Fig.2] La Fig.2 est un logigramme d'un processus de synthèse des conditions d'inhibition s'appliquant à un apprentissage lors d'un démarrage à froid du moteur thermique.

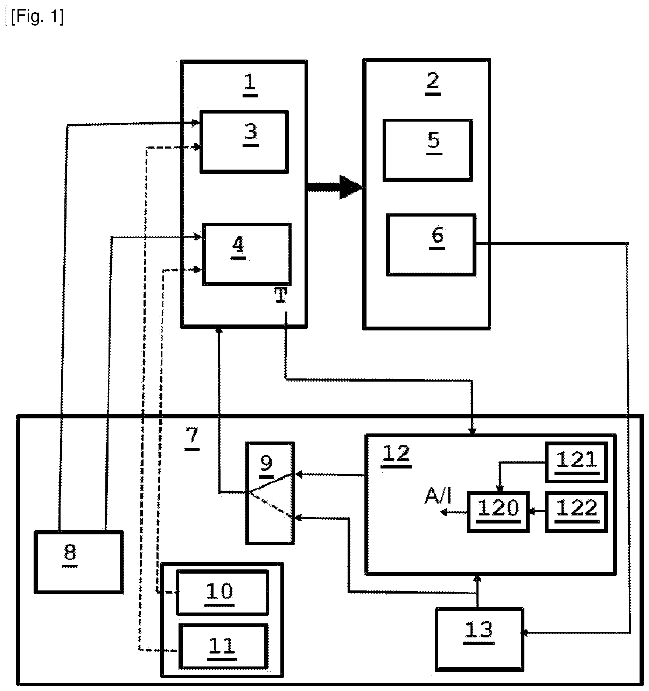

La Fig.1 montre une unité de contrôle moteur 7 en charge du fonctionnement d'un moteur thermique 1 équipé d'une ligne d'échappement de gaz 2 pour une évacuation et un post-traitement de dépollution des gaz d'échappement.

Le moteur thermique 1 comprend des actionneurs 3 de boucle d'air et des actionneurs 4 d'un système d'alimentation en carburant. La ligne d'échappement de gaz 2 comprend un système de dépollution de gaz d'échappement 5 et une sonde de richesse 6, avantageusement une sonde à oxygène, qui est opérationnelle seulement quand une température minimale de fonctionnement est atteinte dans la ligne d'échappement de gaz 2 au niveau de la sonde de richesse 6. La sonde de richesse 6 détermine en fonctionnement normal, c'est-à-dire lorsqu'elle est opérationnelle, une consigne de richesse de carburant à appliquer au moteur thermique 1.

L'unité de contrôle moteur 7 comprend un module de commande de boucle d'air 8. Le module de commande de boucle d'air 8 envoie une consigne d'air admis aux actionneurs 3 de boucle d'air du moteur thermique 1 et une consigne de carburant aux actionneurs 4 du système d'alimentation en carburant du moteur thermique 1.

L'unité de contrôle moteur 7 comprend aussi un module d'adaptation comprenant un sous-module adaptatif de boucle d'air 11 et un sous-module adaptatif de modèle d'injection de carburant 10.

Le sous-module adaptatif de boucle d'air 11 communique avec les actionneurs 3 de boucle d'air du moteur thermique 1. Le sous-module adaptatif de modèle d'injection de carburant 10 communique avec les actionneurs 4 du système d'alimentation en carburant du moteur thermique 1.

L'unité de contrôle moteur 7 comprend aussi un module de régulation de richesse 13 et un sélecteur de position 9. Le sélecteur de position 9 comporte une première position, montrée en pointillés, active lorsque la sonde de richesse 6 présente dans la ligne d'échappement de gaz 2 est opérationnelle, et une deuxième position, montrée en trait plein, active lorsque la sonde de richesse 6 n'est pas opérationnelle.

Le sélecteur 9 communique avec les actionneurs 4 du système d'alimentation en carburant du moteur thermique 1 en leur envoyant un correctif de richesse qui fixe la quantité de carburant injectée corrigée.

L'unité de contrôle moteur 7 comprend aussi un module d'apprentissage de richesse à froid 12, mettant en oeuvre du procédé selon l'invention, pour la correction de la richesse de carburant appliquée au moteur thermique 1, lors d'un démarrage à froid avec une température de la sonde de richesse 6 qui est inférieure à une température minimale prédéterminée de fonctionnement de celle-ci.

Le procédé selon l'invention peut être mis en oeuvre par l'exécution d'instructions de code de programme par un processeur (non représenté) de l'unité de contrôle moteur 7. Le module d'apprentissage de richesse à froid 12 est typiquement un module logiciel embarqué qui est implanté dans une mémoire de l'unité de contrôle moteur 7.

Dans le module 12, l'apprentissage se réalise en observant le comportement de la correction provenant de la régulation de richesse après un démarrage. Les valeurs apprises sont sauvegardées et classées en fonction de premiers paramètres physiques définis tels que, par exemple, une caractéristique mesurée de température T et une durée d'arrêt du moteur thermique avant le démarrage. La caractéristique mesurée de température T est typiquement une température prise parmi des températures mesurées au démarrage regroupant une température de fluide de refroidissement du moteur thermique 1, une température d'air admis dans le moteur thermique 1, une température d'huile de lubrification du moteur thermique 1 et une température d'air extérieur.

Ainsi, il est sélectionné la quantité de carburant injectée corrigée, apprise et mémorisée lors du démarrage précédent se rapprochant le plus du démarrage en cours, relativement ici à la caractéristique mesurée de température T et la durée d'arrêt du moteur thermique 1.

Dans le module d'apprentissage de richesse à froid 12, l'apprentissage pour chaque démarrage précédent peut se faire en comparant la quantité de carburant injectée dans le moteur thermique 1 lors de ce démarrage précédent avec la consigne de richesse dès que la sonde de richesse 6 fonctionne en fin de démarrage à froid et en calculant une quantité de carburant injectée corrigée permettant d'atteindre la consigne de richesse. Dans le module d'apprentissage de richesse à froid 12, chaque démarrage précédent peut être mémorisé dans une liste de démarrages précédents avec au moins la quantité de carburant injectée corrigée, la caractéristique mesurée de température T et la durée d'arrêt du moteur thermique 1.

Lors d'un démarrage à froid en cours, lorsque la sonde de richesse 6 n'est pas encore opérationnelle et que la sélecteur 9 est positionné dans sa deuxième position, le module d'apprentissage de richesse à froid 12 corrige une quantité de carburant injectée dans le moteur thermique 1 en fonction d'une quantité de carburant injectée corrigée, apprise et mémorisée lors d'un précédent démarrage et permettant d'atteindre la consigne de richesse. Le précédent démarrage et la quantité de carburant injectée corrigée mémorisée qui lui correspond sont sélectionnés dans une classe déterminée par les premiers paramètres physiques mesurés pour le démarrage à froid en cours, ici, à titre d'exemple, la caractéristique mesurée de température T et la durée d'arrêt du moteur thermique 1.

Comme visible à la Fig.1, le module d'apprentissage de richesse à froid 12 comprend notamment un sous-module de gestion d'apprentissage 120 qui, par une sortie A/I, active ou inhibe un apprentissage en fonction de conditions d'activation 121 et de conditions d'inhibition 122.

Les conditions d'activation 121 sont différentes conditions qui doivent être satisfaites pour que le sous-module de gestion d'apprentissage 120 délivre une autorisation d'apprentissage. Ainsi, par exemple, les conditions d'activation 121 pourront comprendre au moins une des conditions suivantes:
- une caractéristique mesurée de température du démarrage précédent se rapprochant de moins d'un pourcentage prédéterminé, par exemple 10%, de la caractéristique mesurée de température du démarrage en cours;
- une durée d'arrêt du moteur thermique 1, d'une part, avant le démarrage précédent et, d'autre part, avant le démarrage en cours qui soit suffisante pour une atteinte d'une macération dans le moteur thermique avec des températures initiales différant les unes des autres de moins d'un pourcentage prédéterminé, par exemple 20%;
- d'autres conditions relatives notamment au temps nécessaire pour que la sonde de richesse devienne opérationnelle lors d'un démarrage, à sa durée d'arrêt avant le démarrage et autres paramètres.

Les conditions d'inhibition 122 sont utilisées par le sous-module de gestion d'apprentissage 120 pour décider de l'inhibition de l'apprentissage, en interdisant la restitution d'un correctif appris, c'est-à-une d'une quantité de carburant injectée corrigée, apprise et mémorisée, qui est jugé obsolète.

Cette inhibition de l'apprentissage est nécessaire lorsqu'un temps long s'est écoulé entre deux apprentissages d'une même classe, c'est-à-dire entre l'apprentissage du démarrage précédent et celui du démarrage en cours dans une même classe.

Le vieillissement du moteur thermique 1 lorsqu'un temps long s'est écoulé entre deux apprentissages d'une même classe peut avoir un impact sur la fonction de correction de richesse à froid. En effet, cette fonction de correction de richesse à froid apprend un correctif d'une classe à un instant donné. Si aucun apprentissage n'a été fait dans cette classe pendant un temps long, le correctif appris à l'instant donné ne sera plus valable pour l'état de vieillissement du moteur thermique 1 après ce temps long. Le correctif appris est alors obsolète et sa restitution pour la correction de richesse du démarrage en cours doit être interdite de façon éviter une correction de richesse inadaptée qui pourra générer un excès de polluants.

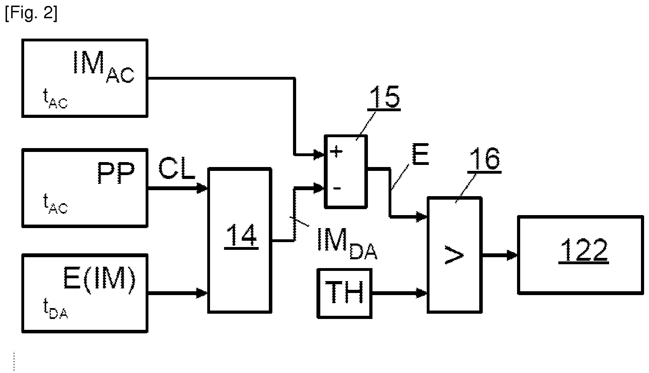

Le processus de synthèse des conditions d'inhibition 122 s'appliquant à un démarrage en cours s'appliquant à un apprentissage lors d'un démarrage à froid du moteur thermique est montré à la Fig.2.

L'inhibition de l'apprentissage est décidée sur la base d'un écart E calculé entre une première image IM_{AC} au temps t_{AC} considéré d'un apprentissage en cours et une deuxième image IM_{DA} à un temps I_{DA} du dernier apprentissage dans une même classe CL. Les images IM_{AC} et IM_{DA} reflètent des états de vieillissement du moteur thermique 1 respectivement aux temps t_{AC} et t_{DA}, et sont représentées par un ensemble de deuxièmes paramètres physiques PP du moteur thermique 1 et/ou du véhicule.

Différents paramètres physiques pourront être utilisés pour les paramètres PP et comprendront par exemple un écart de kilométrage, un indicateur d'évolution des sous-modules adaptatifs 11 et 10 de contrôle moteur, un écart temporel et autres.

Un module de sélection 14 est utilisée pour récupérer l'image IM_{DA} au temps I_{DA} du dernier apprentissage dans la classe CL parmi une pluralité d'images E(IM), organisées par classes, enregistrées aux temps des apprentissages précédents.

La classe CL correspondant à l'image IM_{DA} est identifiée à partir des valeurs des paramètres physiques PP de l'image IM_{AC} au temps t_{AC} de l'apprentissage en cours.

L'écart E entre les premier et deuxième ensembles IM_{AC} et IM_{DA} est calculé par un module de soustraction 15. Un module de comparaison 16 compare l'écart E à un seuil calibrable TH. Dans le cas où l'écart E est supérieur au seuil calibrable TH, le correctif appris sera jugé obsolète et sa restitution sera inhibée. On comprendra que l'écart E et le seuil calibrable TH pourront typiquement être des grandeurs vectorielles, les composants de ces grandeurs vectorielles représentant les écarts obtenues pour les paramètres physiques PP susmentionnés et des seuils calibrables associés. De plus, une fonction booléenne pourra être utilisée pour l'exploitation des résultats de comparaison du module 16 et la synthèse des conditions d'inhibition 122.

L'invention ne se limite pas aux formes de réalisation particulières qui ont été décrites ici à titre d'exemple. L'homme du métier, selon les applications de l'invention, pourra apporter différentes modifications et variantes entrant dans le champ de protection de l'invention.

## Revendications

1. Procédé de correction de la richesse de carburant dans un moteur thermique (1) lors d'un démarrage à froid de celui-ci, avec une sonde de richesse (6) disposée dans la ligne d'échappement de gaz (5) dudit moteur thermique (1) n'ayant pas encore atteint sa température de fonctionnement et n'étant pas opérationnelle, ledit procédé comprenant une correction d'une quantité de carburant injectée dans ledit moteur thermique (1) lors d'un démarrage à froid en cours en fonction de quantités de carburant injectées corrigées apprises de précédents démarrages à froid permettant d'atteindre une consigne de richesse, mémorisées et classées en fonction de premier paramètres physiques, la quantité de carburant injectée corrigée choisie étant celle dont le classement en fonction des premiers paramètres physiques se rapproche le plus du démarrage à froid en cours, **caractérisé en ce qu'**il vérifie la satisfaction de conditions prédéterminées (120) pour autoriser ladite correction, et lesdites conditions prédéterminées comprenant des conditions d'inhibition (122) interdisant ladite correction lorsque l'apprentissage de ladite quantité de carburant injectée corrigée choisie est jugé obsolète par rapport au démarrage à froid en cours, et comprend la détermination (15) d'un écart (E) entre une première image (IMAC) reflétant un premier état de vieillissement dudit moteur thermique (1) à un premier instant (tAC) dudit démarrage à froid en cours et une deuxième image (IMDA) reflétant un deuxième état de vieillissement dudit moteur thermique (1) à un deuxième instant (tDA) dudit précédent démarrage à froid, lesdites images (IMAC, IMDA) étant représentées par un ensemble de deuxièmes paramètres physiques (PP) dudit moteur thermique (1) et/ou d'un véhicule comprenant ledit moteur thermique (1), et une comparaison (16) dudit écart (E) à un seuil prédéterminé (TH), ladite quantité de carburant injectée corrigée choisie étant jugée obsolète (I/A) lorsque ledit écart (E) est supérieur audit seuil prédéterminé (TH).

2. Procédé selon la revendication 1, **caractérisé en ce qu'**il comprend la sélection (14) de ladite deuxième image (IMDA) dans une pluralité d'images (E(IM)) organisées par classes (CL), ladite sélection (14) étant faite à partir de l'ensemble de deuxièmes paramètres physiques (PP).

3. Procédé selon la revendication 1 ou 2, **caractérisé en ce que** ledit ensemble de deuxièmes paramètres physiques (PP) comprend un écart de kilométrage dudit véhicule comprenant ledit moteur thermique (1), un indicateur d'évolution de moyens d'adaptation de contrôle moteur (11, 10) et/ou un écart temporel.

4. Procédé selon l'une des revendications précédentes, **caractérisé en ce que** les premiers paramètres physiques comprennent une durée d'arrêt moteur avant le démarrage en cours, une température prise au démarrage parmi une température de fluide de refroidissement, une température d'air admis dans le moteur thermique, une température d'huile de lubrification du moteur thermique 1, une température d'air extérieur.

5. Unité de contrôle moteur (7) comportant une mémoire stockant des instructions de programme pour la mise en oeuvre du procédé selon l'une quelconque des revendications 1 à 4.

6. Véhicule à moteur thermique (1) comprenant une unité de contrôle moteur (7) selon la revendication 5.

## Patentansprüche

1. Verfahren zur Korrektur des Kraftstofffettgehalts einer Wärmekraftmaschine (1) während eines Kaltstarts derselben, wobei eine in der Abgasleitung (5) der Wärmekraftmaschine (1) angeordnete Kraftstofffettsonde (6) ihre Betriebstemperatur noch nicht erreicht hat und nicht betriebsbereit ist, **dadurch gekennzeichnet, dass** es eine Korrektur der in den Wärmemotor (1) während eines laufenden Kaltstarts eingespritzten Kraftstoffmenge gemäß den korrigierten eingespritzten Kraftstoffmengen umfasst, die aus früheren Kaltstarts gelernt wurden, was es ermöglicht, einen Fettsollwert zu erreichen, gemäß den ersten physikalischen Parametern gespeichert und klassifiziert wird, wobei als korrigierte eingespritzte Kraftstoffmenge diejenige gewählt wird, deren Klassifizierung gemäß den ersten physikalischen Parametern dem laufenden Kaltstart am nächsten kommt, wobei das Verfahren die Erfüllung vorgegebener Bedingungen (120) überprüft, um die Korrektur zu genehmigen, und wobei die vorgegebenen Bedingungen Hemmbedingungen (122) umfassen, die die Korrektur verhindern, wenn das Erlernen der ausgewählten korrigierten eingespritzten Kraftstoffmenge im Verhältnis zum aktuellen Kaltstart als veraltet erachtet wird et umfasst die Bestimmung (15) einer Differenz (E) zwischen einem ersten Bild (IMAC), das einen ersten Alterungszustand der Wärmekraftmaschine (1) zu einem ersten Zeitpunkt ( tAC ) des laufenden Kaltstarts widerspiegelt, und einem zweiten Bild ( IMDA), die einen zweiten Alterungszustand des Wärmemotors (1) zu einem zweiten Zeitpunkt ( tDA ) des vorherigen Kaltstarts widerspiegeln, wobei die Bilder (IMAC, IMDA) durch einen Satz zweiter physikalischer Parameter (PP) des Wärmemotors dargestellt werden (1) und/oder ein Fahrzeug, das den Wärmemotor (1) umfasst, und ein Vergleich (16) der Abweichung (E) mit einem vorgegebenen Schwellenwert (TH), wobei die ausgewählte korrigierte eingespritzte Kraftstoffmenge als veraltet beurteilt wird (I/A). wenn die Abweichung (E) größer als der vorgegebene Schwellenwert (TH) ist.

2. Verfahren nach Anspruch 1, **dadurch gekennzeichnet, dass** es die Auswahl (14) des zweiten Bildes (IMDA) in einer Vielzahl von Bildern (E(IM)) umfasst, die nach Klassen (CL) organisiert sind, wobei die Auswahl (14) aus der Menge erfolgt der zweiten physikalischen Parameter (PP).

3. Verfahren nach Anspruch 1 1 oder 2 2, **dadurch gekennzeichnet, dass** der Satz zweiter physikalischer Parameter (PP) einen Kilometerunterschied des Fahrzeugs mit dem Wärmemotor (1), einen Indikator für die Entwicklung der Motorsteuerungsanpassungsmittel (11, 10) und/oder umfasst eine Zeitlücke.

4. Verfahren nach einem der vorhergehenden Ansprüche, **dadurch gekennzeichnet, dass** die ersten physikalischen Parameter eine Motorstoppdauer vor dem aktuellen Start, eine beim Start gemessene Temperatur aus einer Kühlflüssigkeitstemperatur, einer in die Wärmekraftmaschine eingelassenen Lufttemperatur usw. umfassen Schmieröltemperatur der Wärmekraftmaschine 1, eine Außenlufttemperatur.

5. Motorsteuereinheit (7), umfassend einen Speicher, der Programmanweisungen zur Umsetzung des Verfahrens nach einem der Ansprüche 1 bis speichert 4.

6. Fahrzeug mit Verbrennungsmotor (1), umfassend eine Motorsteuereinheit (7) nach Anspruch 1 5.

## Claims

1. Method for correcting the fuel richness in a heat engine (1) during a cold start thereof, with a richness probe (6) arranged in the gas exhaust line (5) of said heat engine (1) having not yet reached its operating temperature and not being operational, **characterized in that** it comprises a correction of a quantity of fuel injected into said thermal engine (1) during a cold start in progress according to corrected injected fuel quantities learned from previous cold starts making it possible to reach a richness setpoint, memorized and classified according to first physical parameters, the corrected injected fuel quantity chosen being that whose classification according to the first physical parameters comes closest to the cold start in progress, said method checking the satisfaction of predetermined conditions (120) to authorize said correction, and said predetermined conditions comprising inhibition conditions (122) prohibiting said correction when learning of said chosen corrected injected fuel quantity is deemed obsolete in relation to the current cold start et comprises the determination (15) of a difference (E) between a first image (IMAC) reflecting a first state of aging of said thermal engine (1) at a first instant ( tAC ) of said cold start in progress and a second image ( IMDA) reflecting a second aging state of said thermal engine (1) at a second instant ( tDA ) of said previous cold start, said images (IMAC, IMDA) being represented by a set of second physical parameters (PP) of said thermal engine ( 1) and/or a vehicle comprising said thermal engine (1), and a comparison (16) of said deviation (E) to a predetermined threshold (TH), said chosen corrected injected fuel quantity being judged obsolete (I/A ) when said deviation (E) is greater than said predetermined threshold (TH).

2. Method according to claim 1, **characterized in that** it comprises the selection (14) of said second image (IMDA) in a plurality of images (E(IM)) organized by classes (CL), said selection (14) being made from the set of second physical parameters (PP).

3. Method according to claim 1 or 2, **characterized in that** said set of second physical parameters (PP) comprises a mileage difference of said vehicle comprising said thermal engine (1), an indicator of evolution of engine control adaptation means (11, 10) and/or a time gap.

4. Method according to one of the preceding claims, **characterized in that** the first physical parameters include an engine stopping duration before the current start, a temperature taken at start-up from among a cooling fluid temperature, an air temperature admitted into the heat engine, a lubricating oil temperature of the heat engine 1, an outside air temperature.

5. Motor control unit (7) comprising a memory storing program instructions for implementing the method according to any one of claims 1 to 4.

6. Thermal engine vehicle (1) comprising an engine control unit (7) according to claim 5.
